# EUROPÄISCHE PATENTSCHRIFT

(11) **EP 4 353 473 B1**
(45) Veröffentlichungstag und Bekanntmachung des Hinweises auf die Patenterteilung: **30.07.2025**
(21) Anmeldenummer: 22200892.2
(22) Anmeldetag: 11.10.2022
(51) Int. Cl.: B32B 5/18, B32B 5/24

(54) **SCHICHTVERBUND MIT BRANDHEMMENDEM KOMPOSITWERKSTOFF**
LAYERED COMPOSITE WITH FIRE-RETARDANT COMPOSITE MATERIAL
COMPOSITE STRATIFIÉ AVEC MATÉRIAU COMPOSITE IGNIFUGE

(43) Veröffentlichungstag der Anmeldung: 17.04.2024
(73) Patentinhaber: 3D Core GmbH & Co. KG, 32051 Herford (DE)
(72) Erfinder: STREUBER, Fritz M., 32051 Herford (DE)
(74) Vertreter: SSM Sandmair

(56) Entgegenhaltungen:
- WO-A1-2022/132297
- GB-A- 2 145 969

## Beschreibung

Die Erfindung betrifft einen Schichtverbund mit mehreren Materialschichten einschließlich einer Brandschutzschicht aus einem Kompositwerkstoff. Der Schichtverbund kann als Plattenstruktur oder zweidimensional oder dreidimensional gewölbte Schalenstruktur vorliegen. Bei dem Schichtverbund kann es sich insbesondere um eine Fahrzeug-Leichtbaustruktur handeln. Der Schichtverbund kann als Leichtbaustruktur für Land-, Wasser- und Lustfahrzeuge und auch für Raumfahrzeuge eingesetzt werden. Bevorzugt findet er bei Nutzfahrzeugen, Schienenfahrzeugen, Flugzeugen und im Boots- und Schiffsbau Verwendung. Der Schichtverbund eignet sich zur Verwendung als Exterieur- und auch als Interieurstruktur eines Fahrzeugs. Er kann vorteilhafterweise eine Frontmaske eines Fahrzeugs oder eine Fußbodenstruktur eines Fahrzeugs, beispielsweise eine Fußbodenplatte, oder einen Fahrzeugtank oder einen Teilbereich eines Fahrzeugtanks, beispielsweise einen Flugzeugtank, bilden. Trennwände und Schotts sind weitere Verwendungsbeispiele.

Im gewichtsoptimierten Leichtbau muss in zunehmendem Maße der Brandgefahr entgegengewirkt werden, wobei der Forderung eines ausreichenden Brandschutzes die stete Forderung nach Gewichtsreduzierung gegenübersteht. Hinsichtlich des Brandschutzes müssen anwendungsspezifische Bestimmungen erfüllt werden, beispielsweise die DIN ISO 45545 für Schienenfahrzeuge oder den IMO 2010 FTP Code und/oder die International Convention for the Safety of Life at Sea (SOLAS) für maritime Anwendungen und deren Umsetzung in die nationalen Vorschriften.

Aus statischen und/oder dynamischen mechanischen Anforderungen, beispielsweise an die Festigkeit, resultiert typischerweise ein Laminat-Plan, der die einzelnen Schichten beziehungsweise Lagen des Schichtverbunds der jeweiligen Leichtbaustruktur beschreibt. Der Schichtverbund umfasst typischerweise einen Basis-Schaumkern und Fasermaterial-Deckschichten. Schaumkern und Deckschichten werden mit einem Brandschutzharz imprägniert. Üblicherweise wird dieser Laminataufbau durch eine dämmschichtbildende Brandschutzbeschichtung, einer sogenannten Intumeszenz-Schicht, beschichtet. Bei Hitzeeinwirkung schäumt die Intumeszenz-Schicht und bildet eine leichte Isolationsschicht als Hitzebremse. Dabei expandierendes Graphit, beispielsweise sogenanntes Blähgraphit, setzt bei Wärmeeinwirkung Gase frei und bildet bei der Verbrennung eine veraschende, kohlenstoffhaltige Isolierschicht. Die Isolierschicht behindert die Sauerstoffzufuhr und somit die Flammausbreitung in den Schichtverbund. Beispielsweise offenbart das Dokument WO 2022/132297 A1 einen Schichtverbund umfassend in der Reihenfolge Deckschicht (404) -Schaumkern (412) - Deckschicht (408), wobei die Deckschichten Verstärkungsfasern und Mikrohohlkörper aus Keramik oder Glas in einem Kunststoffmaterial (z.B Epoxidharz) umfassen können.

Angesichts hoher Anforderungen werden die brandhemmenden Eigenschaften in vielen Fällen nicht erfüllt, da die Isolationswirkung der Intumeszenz-Schicht nicht ausreicht und die Wärmeleitfähigkeit des im Schichtverbund vorhandenen Harzes zu hoch ist. Es kommt zu nicht zulässigen Flammausbreitungen und zur Entzündung des Schichtverbunds. In der Praxis werden daher zusätzlich zu den aus Festigkeitsgründen erforderlichen Deckschichten weitere Fasermaterial-Deckschichten, die mit Brandschutzharz imprägniert sind, hinzugefügt. Dieser vielschichtige Aufbau verhindert durch seine größeren Masse ein schnelles Eindringen der Hitze in den Kern der Leichtbaustruktur und unterbindet so das Entzünden der brennbaren Bestandteile. Problem der zusätzlichen Deckschichten ist jedoch, dass sie zu einer erheblichen Gewichtsvergrößerung führen. Die jeweilige Struktur erfüllt nun zwar die Forderungen des Brandschutzes, aber nicht mehr die Gewichtsanforderungen an das ursprüngliche Leichtbauteil. Der konventionelle Brandschutz erhöht nicht nur das Gewicht, sondern damit einhergehend auch den Preis der Struktur.

Es ist eine Aufgabe der Erfindung, einen Schichtverbund zu schaffen, der einen guten Brandschutz bietet, aber dennoch ein für den Leichtbau geeignetes, niedriges spezifisches Gewicht aufweist.

Gegenstand der Erfindung ist ein Schichtverbund, der einen Schaumkern aus einem Kunststoffschaum, eine erste Deckschicht und eine zweite Deckschicht, zwischen denen der Schaumkern angeordnet ist, und ein Kunststoffharz umfasst, das im Bereich des Schaumkerns zwischen den Deckschichten vorhandene Zwischenräume füllt und die Deckschichten und den Schaumkern zusammenhält. Der Schaumkern kann strukturiert sein, so dass er zweidimensional oder vorzugsweise dreidimensional verformbar ist. So kann der Schaumkern in einer Draufsicht in beiden Flächenrichtungen nebeneinander angeordnete Schaummaterialinseln aufweisen, wobei je zwei benachbarte Schaummaterialinseln durch einen dazwischenliegenden Schwächungsbereich voneinander getrennt und über jeweils eine Schaummaterialbrücke miteinander verbunden sind, so dass sie relativ zueinander beweglich sind und der Schaumkern insgesamt zweidimensional oder dreidimensional durch Verlagerung von Schaummaterialinseln relativ zueinander verformt werden kann. Die Schwächungsbereiche können insbesondere Durchbrüche zwischen den Materialinseln sein, die von den verbindenden Materialbrücken überbrückt werden.

Die erste Deckschicht und/oder die zweite Deckschicht ist oder sind jeweils eine Fasermaterialschicht, die in Kunststoff eingebettete Verstärkungsfasern enthält. Die Verstärkungsfasern können vorteilhafterweise ein textiles Flächengebilde, beispielsweise ein Fasergewebe oder ein Fasergelege oder eine Maschenware oder ein Vlies, bilden. Die jeweilige Fasermaterialschicht kann mehrere textile Flächengebilde nebeneinander und/oder insbesondere in mehreren Lagen übereinander aufweisen.

Der Schichtverbund umfasst ferner eine Brandschutzschicht aus einem Kompositwerkstoff. Die Brandschutzschicht ist an einer vom Schaumkern abgewandten Seite der Fasermaterialschicht vorgesehen. Sind die erste Deckschicht und die zweite Deckschicht jeweils eine Fasermaterialschicht, ist eine Brandschutzschicht aus dem Kompositwerkstoff an der vom Schaumkern abgewandten Seite wenigstens einer der Fasermaterialschichten vorgesehen. Die Brandschutzschicht kann unmittelbar auf der vom Schaumkern abgewandten Seite der Fasermaterialschicht vorgesehen sein, im Schichtverbund also unmittelbar auf die Fasermaterialschicht folgen. Zwischen der Brandschutzschicht und der darunterliegenden Fasermaterialschicht kann aber auch eine Intumeszenz-Schicht als Zwischenschicht angeordnet sein, wobei diese Zwischenschicht unmittelbar auf die Fasermaterialschicht und/oder die Brandschutzschicht unmittelbar auf die Zwischenschicht folgen kann.

Nach der Erfindung enthält der Kompositwerkstoff und dementsprechend die hieraus bestehende Brandschutzschicht Mikrohohlkörper aus Glas oder Keramik in einem Kunststoffmaterial. Die Mikrohohlkörper definieren in der Polymerphase Hohlräume, so dass der Kompositwerkstoff eine geringere spezifische Dichte als das Kunststoffmaterial des Kompositwerkstoffs aufweist. Auf diese Weise wird eine Brandschutzschicht mit geringer Dichte und dementsprechend geringem spezifischen Gewicht erhalten.

In vorteilhaften Ausführungen weist der Kompositwerkstoff und somit die Brandschutzschicht eine Dichte von höchstens 0,8 g/ccm (Gramm pro Kubikzentimeter) auf. Bevorzugter hat der Kompositwerkstoff eine Dichte von höchstens 0,6 g/ccm.

Soweit Dichteangaben gemacht werden, beziehen sich diese auf einen Druck von 1,01325 bar und eine Temperatur von 20°C (Laborbedingungen).

Das Kunststoffmaterial des Kompositwerkstoffs und somit der Brandschutzschicht kann eine reine Polymerphase, ohne Zuschlagstoffe, oder eine mit Füllmaterial und/oder funktionalen Additiven ausgerüstete Polymerphase sein. Die Polymerphase des Kompositwerkstoffs kann aus einem einzigen Polymer oder mehreren unterschiedlichen Polymeren einschließlich Copolymeren und Polymerblends gebildet sein. Diese Polymerphase hat eine Dichte von vorzugsweise höchstens 1,5 g/ccm oder höchstens 1,4 g/ccm oder bevorzugter höchstens 1,3 g/ccm. Die Polymerphase kann andererseits eine Dichte von wenigstens 0,7 g/ccm oder wenigstens 0,9 g/ccm haben.

Die Polymerphase kann mit einem oder mehreren unterschiedlichen Brandschutzadditiven ausgerüstet sein. In vorteilhaften Ausführungen wird das jeweilige Brandschutzadditiv der Art nach so gewählt und nur mit solch einem Massenanteil zugegeben, dass die für die Polymerphase genannten Obergrenzen auch noch für das ausgerüstete Kunststoffmaterial des Kompositwerkstoffs gelten, das ausgerüstete Kunststoffmaterial also einschließlich Brandschutzadditiv und vorzugsweise auch einschließlich etwaiger anderer Zuschlagstoffe, eine Dichte von höchstens 1,5 g/ccm oder höchstens 1,4 g/ccm oder bevorzugter höchstens 1,3 g/ccm hat.

Die Mikrohohlkörper können insbesondere Hohlkugeln sein.

Die Mikrohohlkörper haben vorzugsweise eine Dichte von höchstens 0,4 g/ccm oder höchstens 0,3 g/ccm. Noch bevorzugter haben sie eine Dichte von höchstens 0,2 g/ccm. Derartige Mikrohohlkörper können beispielsweise von der 3M Corp. (Saint Paul, MN, USA) bezogen werden. So sind beispielsweise die Glashohlkugeln K1, K11, K15, K20, K20HS, K25, K37, A16/500, A20/1000, H20/1000, S15 und S22 der 3M Corp. mit durchschnittlichen Teilchendichten zwischen 0,10 g/ccm und 0,27 g/ccm als die Mikrohohlkörper des brandhemmenden Kompositwerkstoffs geeignet.

Wünschenswert ist, wenn die Mikrohohlkörper bei Drücken über 15 bar, bevorzugt über 20 bar, druckfest und/oder bei Umgebungstemperaturen über 500°C, bevorzugt über 700°C, wärmebeständig sein.

Die Mikrohohlkörper können zu einem Massenanteil von wenigstens 80 % der pro Einheitsvolumen der Brandschutzschicht vorhandenen Mikrohohlkörper eine Größe von maximal 120 µm (Mikrometer) oder maximal 110 µm oder maximal 100 µm aufweisen. Handelt es sich bei den Mikrohohlkörpern wie bevorzugt um Mikrohohlkugeln, so bedeutet dies, dass 80 % der Masse der pro Einheitsvolumen der Brandschutzschicht vorhandenen Mikrohohlkörper einen Außendurchmesser von höchstens 120 µm oder höchstens 110 µm oder höchstens 100 µm aufweisen. Falls die Mikrohohlkörper keine Kugeln, sondern beispielsweise längs einer Hauptachse langgestreckte Hohlkörper sind, gelten die Obergrenzen für die Größe für jeweils die größte äußere Erstreckung der Mikrohohlkörper. Bevorzugt weisen wenigstens 90 Ma% der Mikrohohlkörper pro Einheitsvolumen der Brandschutzschicht eine Größe von höchstens 120 µm oder höchstens 110 µm oder höchstens 100 µm auf. Andererseits ist es vorteilhaft, wenn ein Massenanteil der Mikrohohlkörper von wenigstens 80 % eine Größe, beispielsweise ein Kugeldurchmesser von wenigstens 20 µm oder wenigstens 30 µm aufweisen. Die Untergrenze von 30 µm und insbesondere die Untergrenze von 20 µm gilt in bevorzugten Ausführungen für wenigstens 90 Ma% der Mikrohohlkörper. Auch diese Prozentangabe bezieht sich auf die Gesamtmasse der Mikrohohlkörper pro Einheitsvolumen der Brandschutzschicht.

Der Leichtbauweise förderlich ist es, wenn der Volumenanteil der Mikrohohlkörper des Kompositwerkstoffs wenigstens so groß wie der Volumenanteil des Kunststoffmaterials des Kompositwerkstoffs ist. Der Volumenanteil der Mikrohohlkörper kann wenigstens 1,5-mal so groß oder insbesondere wenigstens zweimal so groß wie der Volumenanteil des Kunststoffmaterials sein. Der Kompositwerkstoff bzw. die Brandschutzschicht kann zu wenigstens 50 vol.% oder wenigstens 60 vol.% oder bevorzugter zu wenigstens 70 vol.% aus den Mikrohohlkörpern bestehen.

Im Sinne des Leichtbaus wird in vorteilhaften Ausführungen als Kunststoffharz, das den Schaumkern und die Deckschichten zusammenhält, ein Harzmaterial verwendet, das eine Dichte von höchstens 1,5 g/ccm oder höchstens 1,3 g/ccm hat. Das Kunststoffharz kann insbesondere ein Duromer oder ein Vitrimer sein oder beides in Kombination enthalten.

Von Vorteil ist es, wenn der Kompositwerkstoff eine geringere Dichte als das Kunststoffharz hat, das den Schaumkern und die Deckschichten zusammenhält. Falls die Polymerphase des Kompositwerkstoffs nicht bereits als solche eine geringere Dichte als dieses Kunststoffharz aufweist, wird die geringere Dichte des Kompositwerkstoffs zumindest durch die Mikrohohlkörper erzielt.

Eine Aufgabe des Schaumkerns ist es, die erste und die zweite Deckschicht auf Abstand zueinander zu halten. Der den Schaumkern bildende Kunststoffschaum kann eine sehr geringe Dichte von höchstens 0,4 g/ccm oder sogar nur höchstens 0,2 g/ccm haben.

Aufgrund des hohen spezifischen Wärmewiderstands des Kompositwerkstoffs wird ein wirksamer Brandschutz bereits mit einer Brandschutzschicht erzielt, die höchstens 2 mm (Millimeter) oder höchstens 1,5 mm dick ist. Auch dies kommt einer leichten Bauweise zugute. Ein ausreichender Brandschutz kann auch bei derart geringen Schutzschichtdicken insbesondere dann erzielt werden, wenn die Mikrohohlkörper zu wenigstens 80 Ma% oder wenigstens 90 Ma% im genannten Größenbereich zwischen 20 µm und 120 µm oder zwischen 20 µm und 100 µm und, bevorzugter, zwischen 20 µm und 100 µm liegen. Andererseits ist es vorteilhaft, wenn die Brandschutzschicht eine Dicke von wenigstens 0,6 mm oder wenigstens 1 mm hat.

Der Wärmeleitkoeffizient λ des Kompositwerkstoffs der Brandschutzschicht ist vorteilhafterweise höchstens halb so groß oder beträgt bevorzugter höchstens ein Drittel des Wärmeleitkoeffizienten, die typische Verbundwerkstoffe von Fasermaterial-Deckschichten aufweisen. In vorteilhaften Ausführungen ist der Wärmeleitkoeffizient λ des Kompositwerkstoffs der Brandschutzschicht kleiner als 0,6 W/(m•K) oder kleiner als 0,5 W/(m•K) und bevorzugt kleiner als 0,3 W/(m•K) oder kleiner als 0,2 W/(m•K). Bevorzugt wird ein Wärmeleitkoeffizient λ aus dem Bereich von 0,1 W/(m•K) oder 0,15 W/(m•K) bis maximal 0,5 W/(m•K).

Der Volumenanteil des Kunststoffmaterials des Kompositwerkstoffs kann auf ein für den Zusammenhalt der Brandschutzschicht erforderliches Minimum reduziert werden. Die Mikrohohlkörper können in der Brandschutzschicht vorteilhafterweise als dichteste Packung, beispielsweise als dichteste Kugelpackung, vorliegen. Sie können unmittelbar aneinanderstoßen. Das Kunststoffmaterial füllt in vorteilhaften Ausführungen lediglich die unvermeidlichen Hohlräume zwischen den benachbarten Mikrohohlkörpern.

Die Polymerphase des Kompositwerkstoffs kann insbesondere ein Epoxidharz und/oder ein Vinylesterharz und/oder ein gesättigtes Polyesterharz und/oder ein Epoxy-Vitrimer und/oder ein Polyphenolharz enthalten oder von einem dieser Polymere oder einer Mischung von zwei oder mehr dieser Polymere gebildet werden. Besonders geeignet sind Epoxy-Vitrimere, insbesondere biobasierte Epoxy-Vitrimere, und biobasierte Polyphenolharze, beispielsweise Furanharze. Die Polymerphase des Kompositwerkstoffs kann auch der Kunststoffklasse nach unterschiedliche Polymerkomponenten, beispielsweise eine duromere und eine plastomere Komponente, eine duromere und eine vitrimere Komponente, eine plastomere und eine vitrimere Komponente oder alle drei unterschiedliche Komponenten in Kombination enthalten. Auch dabei kann wenigstens eine der Komponenten ein biobasiertes Polymermaterial, beispielsweise eine Polyphenol-Komponente oder Epoxy-Vitrimer-Komponente, sein.

Der Kompositwerkstoff der Brandschutzschicht kann mit einem oder mehreren unterschiedlichen Brandschutzadditiven zusätzlich zu den Mikrohohlkörpern ausgerüstet sein. Als Brandschutzadditiv kommen insbesondere phosphorhaltige Additive, wie etwa Polyphosphate und/oder Ammoniumphosphate und/oder Ammoniumpolyphosphate und/oder Melamin und/oder Melaminphosphate und/oder Melaminpolyphosphate und/oder DOPO-Phosphoramidate, in Frage. Ist die Polymerphase des Kompositwerkstoffs mit einem oder mehreren zusätzlichen Brandschutzadditiven ausgerüstet, macht der Anteil des einen oder der mehreren unterschiedlichen Brandschutzadditive insgesamt wenigstens 0,1 Ma% und höchstens 20 Ma% des Kunststoffmaterials des Kompositwerkstoffs aus, wobei als das Kunststoffmaterial die Polymerphase und die optionalen Zuschläge gemeinsam verstanden werden. Aufgrund der Mikrohohlkörper aus Glas oder einer feuerhemmenden Keramik sind zusätzliche Brandschutzadditive allerdings nicht erforderlich und in vorteilhaften Ausführungen auch nicht vorhanden oder können zumindest auf ein vergleichsweise geringes Maß reduziert werden. Dies kommt der Leichtbauweise zugute.

Der Schichtverbund kann zwischen der Brandschutzschicht und der zum Schaumkern hin nächsten Fasermaterialschicht, wie bereits erwähnt, zusätzlich eine Intumeszenz-Schicht als Gelcoat-Deckschicht aufweisen, um einen zusätzlichen Schutz gegen Feuer zu generieren. Stattdessen oder zusätzlich kann eine Intumeszenz-Schicht in Form einer Gelcoat-Deckschicht an einer dem Schaumkern abgewandten Seite der Brandschutzschicht vorgesehen sein, um einen zusätzlichen Brandschutz zu generieren.

Der Kompositwerkstoff eignet sich nicht nur zur Bildung einer Brandschutzschicht außerhalb der Kernschichten, nämlich des Schaumkerns und der ersten und der zweiten Deckschicht, sondern auch zur Auskleidung des Schaumkerns. Der brandhemmende Kompositwerkstoff kann in dieser Funktion Vertiefungen an der äußeren Oberfläche des Schaumkerns, beispielsweise offene Poren und/oder Perforationen, und/oder im Bereich des Schaumkerns optional vorhandene andere Kavitäten füllen, um die Harzaufnahme des Schaumkerns zu reduzieren und/oder den Schaumkern vor Brand zu schützen. Kunststoffschäume weisen mit abnehmender Dichte größer werdende offene Poren vor allem in Bereichen auf, in denen der Schaumkern nachträglich bearbeitet wurde, beispielsweise in Bereichen, in denen der Schaumkern mittels eines Trennverfahrens, wie etwa Schneiden und/oder Sägen, strukturiert wurde. Die offenen Poren füllen sich bei der Imprägnierung mit dem die erste und zweite Deckschicht verbindenden Kunststoffharz der inneren Harzmatrix, wodurch das Gewicht des Schaumkerns beziehungsweise des Kernverbunds aus Schaumkern und erster und zweiter Deckschicht erhöht wird. Indem der Schaumkern außen zumindest bereichsweise mit einer Oberflächenschicht aus dem Kompositwerkstoff überzogen bzw. ausgekleidet wird, wobei dieser Kompositwerkstoff nicht zuletzt wegen seiner Mikrohohlkörper eine geringere Dichte als das Kunststoffharz der inneren Harzmatrix aufweist, kann das Gewicht des Schichtverbunds weiter reduziert werden.

Das Verschließen von Hohlräumen des Schaumkerns mit dem Kompositwerkstoff ist vorteilhaft nicht nur in Kombination mit der außerhalb des Kernverbunds gebildeten Brandschutzschicht, sondern trägt auch für sich gesehen zur Verbesserung des Brandschutzes bei. Vorteilhaft ist daher auch ein Schichtverbund mit den Anspruchsmerkmalen 1.1 bis 1.3, ohne die Merkmale 1.4 und 1.5, bei dem stattdessen der Schaumkern zumindest bereichsweise mit dem hier offenbarten Kompositwerkstoff ausgekleidet ist, so dass der Kompositwerkstoff offene Poren des Kunststoffschaums an der äußeren Oberfläche des Schaumkerns verschließt und dadurch verhindert, dass Kunststoffharz der inneren Harzmatrix beim Imprägnieren in den Schaumkern eindringt, oder zumindest die Menge an eintretendem Kunststoffharz reduziert.

Das Kunststoffmaterial der Brandschutzschicht kann mit Metalloxidpartikeln, beispielsweise Zinkoxidpartikeln, versetzt sein, um einen Schutz vor elektromagnetischen Störimpulsen zu bilden. Enthält das Kunststoffmaterial Metalloxidpartikel, sind diese wenigstens 20 nm (Nanometer) und höchstens 250 nm groß. Ein Schichtverbund mit einer derart ausgerüsteten Brandschutzschicht kann beispielsweise eine Wandstruktur eines Gehäuses für elektronische Bauteile oder Wandstrukturen von Räumen bilden, um elektromagnetische Störimpulse von in den Räumen angeordneten elektronischen Geräten fernzuhalten.

Zusätzlich oder zwecks Gewichtsoptimierung anstelle der Metalloxidpartikel können die Mikrohohlkörper oder zumindest ein Teil der Mikrohohlkörper des Kompositwerkstoffs mit Metall beschichtet sein, um besagten Schutz vor elektromagnetischen Störimpulsen zusätzlich zum Brandschutz zu erhalten. Werden Mikrohohlkörper aus Glas verwendet, eignet sich der Kompositwerkstoff und in der Folge der Schichtverbund wegen der guten dielektrischen Eigenschaften derartiger Mikrohohlkörper auch ohne zusätzliche Maßnahmen, wie etwa eine Metallbeschichtung und/oder metalloxidische Zuschlagstoffe, zur Herstellung von Leichtbaustrukturen zur Abdeckung elektronischer Sende- und/oder Empfangsanlagen bei gleichzeitigem Schutz vor Entzündung.

Der Schichtverbund kann an einer dem Schaumkern abgewandten Seite der Brandschutzschicht eine oder mehrere weitere Brandschutzschicht(en) aufweisen, um den Brandschutz bei gleichzeitig geringem Gewicht noch zu verbessern. Die insgesamt zwei oder mehr Brandschutzschichten können sich in Bezug auf die Schichtdicke und/oder das Kunststoffmaterial und/oder die Mikrohohlkörper und/oder das Mischungsverhältnis von der hier offenbarten Brandschutzschicht unterscheiden. Andererseits gelten die Ausführungen zur Brandschutzschicht und deren Kompositwerkstoff für jede weitere Brandschutzschicht gleichermaßen.

Im Sinne eines möglichst geringen Gewichts ist es vorteilhaft, wenn die Funktion des Brandschutzes auf die Brandschutzschicht und/oder eine Auskleidung von Kavitäten an der Oberfläche des Schaumkerns mit dem Kompositwerkstoff konzentriert wird. Grundsätzlich kann oder können jedoch zusätzlich auch der Kunststoffschaum des Schaumkerns und/oder das Kunststoffharz, das den Schaumkern und die Deckschichten zusammenhält, mit einem oder mehreren unterschiedlichen Brandschutzadditiven ausgerüstet sein.

Der im Zusammenhang mit der Brandschutzschicht offenbarte Kompositwerkstoff eignet sich auch vorzüglich zur Verwendung als hochgefüllte Brandschutz-Spachtelmasse, um Kavitäten zwischen nebeneinander oder aufeinander angeordneten Leichtbaustrukturen oder Kavitäten einer Leichtbaustruktur zu füllen. So kann der Kompositwerkstoff beispielsweise zum Füllen von Fugen verwendet werden oder den Kehlbereich zweier Leichtbaustrukturen, die miteinander einen Überlappstoß bilden, also überlappend aufeinander liegen, wie eine Kehlnaht auskleiden. Dabei kann der Kompositwerkstoff als Spachtelmasse insbesondere in Kombination mit Leichtbaustrukturen verwendet werden, die einen erfindungsgemäßen Schichtverbund aufweisen, um eine zwischen benachbarten Leichtbaustrukturen oder an einer Leichtbaustruktur eventuell sonst verbleibende Brandschutzlücke zu schließen. Der Kompositwerkstoff ist somit auch als solcher von Vorteil, nämlich als Spachtelmasse oder auch als Rohstoff zum Auftragen auf platten- oder schalenförmige Strukturen, insbesondere Leichtbaustrukturen. Soweit Merkmale des brandhemmenden Kompositwerkstoffs anhand des erfindungsgemäßen Schichtverbunds offenbart werden, gelten die diesbezüglichen Ausführungen auch für den Kompositwerkstoff als solchen, als Ausgangsrohstoff für die Veredelung von Leichtbaustrukturen und/oder als Spachtelmasse.

Nachfolgend werden Ausführungsbeispiele der Erfindung anhand von Figuren erläutert. An den Ausführungsbeispielen offenbar werdende Merkmale bilden jeweils einzeln und in jeder Merkmalskombination die Gegenstände der Ansprüche und auch die vorstehend erläuterten Ausgestaltungen sowie Aspekte vorteilhaft weiter. Es zeigen:
- Figur 1: einen erfindungsgemäßen Schichtverbund in einer Isometrie,
- Figur 2: den Schichtverbund in einem Querschnitt,
- Figur 3: einen Bereich einer Brandschutzschicht des Schichtverbunds in schematischer Darstellung und
- Figur 4: einen Bereich einer modifizierten Brandschutzschicht in schematischer Darstellung.

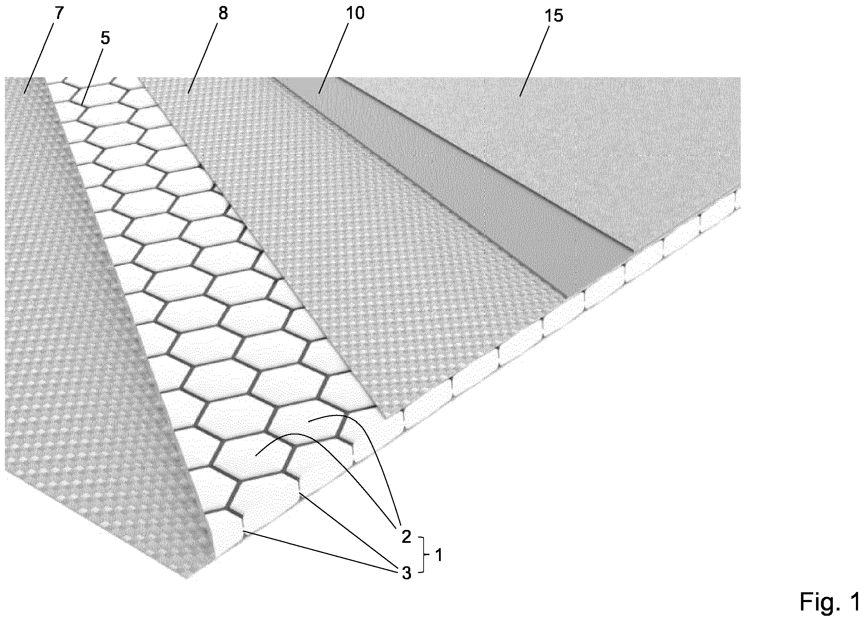

Figur 1 zeigt einen erfindungsgemäßen Schichtverbund in Form eines plattenförmigen Halbzeugs. Der Schichtverbund umfasst einen Schaumkern 1 aus einem Kunststoffschaum, beispielsweise geschäumtem Polyethylenterephthalat (PET). Der Schaumkern 1 ist strukturiert, so dass er dreidimensional verformbar ist. Der Schaumkern 1 ist ein Flächengebilde mit einer Struktur, die Verformungen des Schaumkerns 1 um in der Fläche liegende Achsen erlaubt, so dass der Schaumkern 1 ohne nennenswerten mechanischen Widerstand beispielsweise zu einem Rohr oder einer um unterschiedliche Achsen gewölbten Schale geformt werden kann. Der Schaumkern 1 ist in eine Vielzahl von in der Draufsicht nebeneinander angeordneten Materialinseln 2 unterteilt, die durch Materialschwächungen voneinander abgegrenzt sind. Im Bereich der Materialschwächungen, die insbesondere als Durchbrüche gebildet sein können, verbleiben Verbindungsstege 3, wobei jede der Materialinseln 2 über jeweils wenigstens einen, vorzugsweise jeweils einen einzigen Verbindungssteg 3 mit allen unmittelbar benachbarten Materialinseln 2 verbunden ist.

Der Schaumkern 1 ist zwischen einer ersten Deckschicht 7 und einer zweiten Deckschicht 8 angeordnet, die den Schaumkern 1 an einer Unterseite und einer Oberseite abdecken.

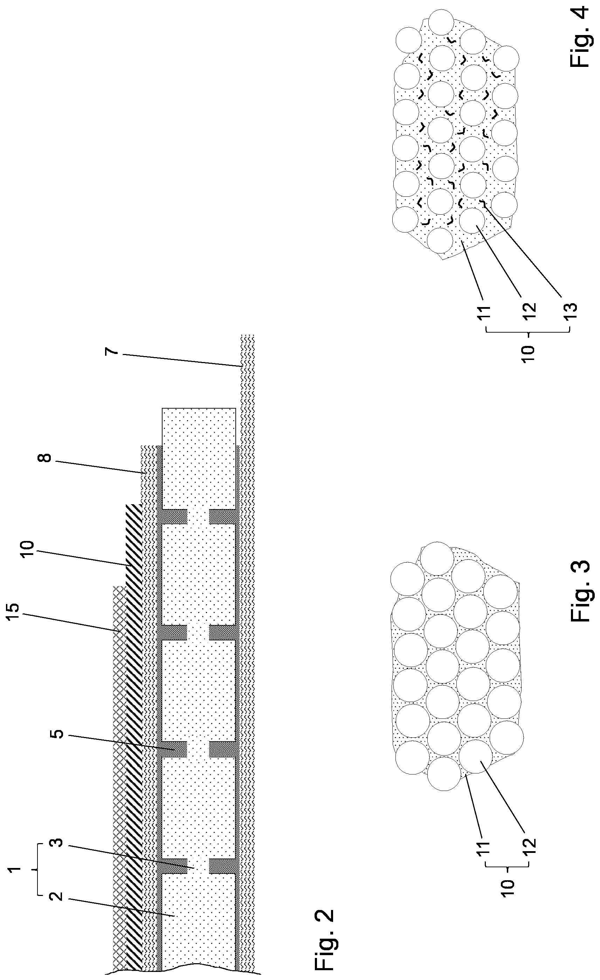

Figur 2 zeigt den Schichtverbund in einem zu den Deckschichten 7 und 8 orthogonalen Schnitt. Der Schnitt erstreckt sich durch die Materialinseln 2 und die Verbindungsstege 3 des Schaumkerns 1. Die zwischen den Deckschichten 7 und 8 im Bereich des Schaumkerns 1 verbleibenden Kavitäten, die jeweils benachbarte Materialinseln 2 gegeneinander abgrenzen, aber von den Verbindungsstegen 3 überbrückt werden, sind mit einem Kunststoffharz 5 gefüllt. Das Kunststoffharz 5 bedeckt auch die Unterseite und die Oberseite des Schaumkerns 1 zumindest bereichsweise und bildet dort eine dünne Harzschicht im Übergang vom Schaumkern 1 zur jeweiligen Deckschicht 7 und 8. Das Kunststoffharz 5 verbindet die Deckschichten 7 und 8 stoffschlüssig und füllt oder durchsetzt dabei den Schaumkern 1 im Bereich der Kavitäten oder anders gestalteten Materialschwächungen (Figur 1). Das Kunststoffharz 5 bildet eine Harzmatrix, welche die Materialinseln 2 seitlich und vorzugsweise auch an deren Unterseite und Oberseite einfasst.

Der Schaumkern 1 bildet mit den Deckschichten 7 und 8 sowie dem verbindenden Kunststoffharz 5 eine Basis-Sandwich-Struktur. Die Basis-Sandwich-Struktur 1, 5, 7, 8 kann bereits das mechanische Gerüst für eine Leichtbaustruktur, beispielsweise eine Leichtbauplatte oder eine Leichtbau-Schalenstruktur, bilden und in dieser Funktion die statischen und/oder dynamischen Lasten der Leichtbaustruktur aufnehmen.

Der Schichtverbund weist, wie in den Figuren 1 und 2 erkennbar, an einer vom Schaumkern 1 abgewandten Seite der Deckschicht 8 eine Brandschutzschicht 10 auf. Die Brandschutzschicht 10 besteht aus einem Kompositwerkstoff. Der Kompositwerkstoff kann unmittelbar auf die Deckschicht 8 aufgebracht sein. Alternativ kann auf die Deckschicht 8 zunächst auch eine zweckmäßigerweise dünne Zwischenschicht, beispielsweise eine Gelcoat-Schicht, aufgebracht und der Kompositwerkstoff auf diese Zwischenschicht aufgebracht sein. Der Kompositwerkstoff kann auf die Deckschicht 8 oder eine optionale Zwischenschicht beispielsweise aufgespritzt, aufgesprüht oder mittels einer Rolle aufgetragen werden.

In den Figuren 1 und 2 ist angedeutet, dass der Schichtverbund an der vom Schaumkern 1 abgewandten Seite der Brandschutzschicht 10, vom Schaumkern 1 aus gesehen weiter außen, eine Intumeszenz-Schicht 15 aufweisen kann. Die Intumeszenz-Schicht 15 kann zusätzlich zu der optionalen Zwischenschicht oder stattdessen vorgesehen sein. Sie kann insbesondere eine Gelcoat-Schicht sein. Die Intumeszenz-Schicht 15 und/oder die optionale Zwischenschicht kann oder können beispielsweise zur Verbesserung des Brandschutzes und/oder als mechanischer Schutz für die Brandschutzschicht 10 und/oder die darunter liegende Basis-Sandwich-Struktur 1, 5, 7, 8 dienen.

Figur 3 zeigt einen kleinen Bereich der Brandschutzschicht 10 stark vergrößert. Die Brandschutzschicht 10 besteht aus dem Kompositwerkstoff, der aus einem Kunststoffmaterial 11 als Träger beziehungsweise Matrix und im Kunststoffmaterial 11 verteilten Mikrohohlkörpern 12 aus Glas oder einem keramischen Material. Obgleich die Mikrohohlkörper 12 grundsätzlich beliebig geformt sein können, beispielsweise langgestreckt oval, handelt es sich zweckmäßigerweise um Mikrohohlkugeln. Geeignete Mikrohohlkugeln aus Glas können beispielsweise von der 3M Corporation (Minnesota, USA) bezogen werden.

Von den Mikrohohlkörpern 12 haben wenigstens 80 Ma% oder wenigstens 90 Ma% eine äußere Erstreckung von höchstens 120 µm. Bevorzugter haben wenigstens 80 Ma% oder wenigstens 90 Ma% eine äußere Erstreckung von maximal 110 µm oder maximal 100 µm. Vorteilhaft ist, wenn wenigstens 80 Ma% oder wenigstens 90 Ma% der Mikrohohlkörper 12 eine äußere Erstreckung von wenigstens 20 µm haben. Bevorzugter ist es, wenn wenigstens 80 Ma% der Mikrohohlkörper 12 eine größte äußere Erstreckung von wenigstens 30 µm haben. Handelt es sich bei den Mikrohohlkörpern 12 wie im Ausführungsbeispiel um Mikrohohlkugeln, ist die "äußere Erstreckung" der äußere Durchmesser der Mikrohohlkugeln. Durch die Auswahl der Mikrohohlkörper 12 aus dem genannten Größenbereich wird ein Kompositwerkstoff mit geringer Dichte einerseits und ausreichender Druckfestigkeit der Mikrohohlkörper 12 andererseits erhalten.

Das Kunststoffmaterial 11 ist zumindest im Wesentlichen eine Polymerphase, wobei die Polymerphase aus einem einzigen Polymer oder aus mehreren Polymeren in Kombination, einschließlich Copolymeren und Polymerblends bestehen kann. Das Kunststoffmaterial 11 kann Zuschlagstoffe enthalten, beispielsweise reine Füller und/oder funktionale Additive, insbesondere Brandschutzadditive und/oder Additive beispielsweise zur Stoßdämmung oder einer anderen mechanischen Eigenschaft und/oder zur Verbesserung oder Erzielung einer elektromagnetischen Abschirmeigenschaft. Die Polymerphase, das heißt die rein polymeren Inhaltsstoffe, machen wenigstens 80 Ma% oder wenigstens 85 Ma% oder wenigstens 90 Ma% des Kunststoffmaterials 11 aus. Den optional verbleibenden Massenanteil liefern der oder die mehreren unterschiedlichen Zuschlagstoffe.

Figur 4 zeigt ebenfalls einen kleinen Bereich einer Brandschutzschicht 10 aus einem modifizierten Kompositwerkstoff. Der modifizierte Kompositwerkstoff unterscheidet sich vom vorstehend beschriebenen Kompositwerkstoff dadurch, dass sein Kunststoffmaterial 11 Metalloxidpartikel 13, beispielsweise Zinkoxidpartikel, enthält. Die Metalloxidpartikel 13 haben äußere Abmessungen aus dem Bereich von 20 nm bis 250 nm und dienen der Erzielung oder Verbesserung einer elektromagnetischen Abschirmwirkung. Im Übrigen gelten die Ausführungen zum Kompositwerkstoff der Figur 3, wie beispielsweise die Ausführungen zur Obergrenze für den Massenanteil von Zuschlagstoffen.

Für die Brandschutzschicht 10 kann als Kunststoffmaterial 11 beispielsweise ein Epoxidharz mit einer Dichte zwischen 1,17 g/ccm und 1,25 g/ccm verwendet werden. Dieses Kunststoffmaterial 11 wird mit Mikrohohlkugeln 12 mit Durchmessern aus dem Bereich von 20 µm bis 120 µm vermischt. Bevorzugt haben wenigstens 80 Ma% der Mikrohohlkugeln 12 einen Durchmesser von höchstens 110 µm oder höchstens 100 Mikrometer.

Die Viskosität des Kunststoffmaterials 11 wird so niedrig eingestellt, dass die Mikrohohlkugeln 12 an ihren äußeren Oberflächen vollständig benetzt, im vermischten Zustand dicht an dicht gepackt und die zwischen den Mikrohohlkugeln 12 verbleibenden Zwischenräume gleichmäßig mit dem Kunststoffmaterial 11 gefüllt sind. Ferner wird die Viskosität durch die Wahl des Materials - Polymerphase mit optionalem/n Zuschlagstoff(e) - und/oder der Temperatur so eingestellt, dass sich der Kompositwerkstoff, also das Gemisch aus Kunststoffmaterial 11 und Mikrohohlkugeln 12, durch Spritzen, Streichen, Rollen oder dergleichen gleichmäßig auftragen lässt.

Die Mikrohohlkörper 12 haben in vorteilhaften Ausführungen eine Dichte von weniger als 0,4 g/ccm oder weniger als 0,3 g/ccm, bevorzugt sogar weniger als 0,2 g/ccm. In der Mischung und auch im fertigen Schichtverbund, das heißt im festen Zustand der Brandschutzschicht 10, enthält die Brandschutzschicht 10 die Mikrohohlkörper 12 zu einem Volumenanteil von wenigstens 60 vol.% oder wenigstens 70 vol.%, und das Kunststoffmaterial 11 macht den jeweils restlichen Volumenanteil aus.

Enthält das Kunststoffmaterial 11 keine Zuschlagstoffe, so ergibt sich für den Kompositwerkstoff und damit für die fertige Brandschutzschicht 10 auf der Basis der genannten Werte für die in Bezug auf das Gewicht ungünstigste Kombination eine Dichte von 0,74 g/ccm (0,6•0,4 g/ccm + 0,4•1,25 g/ccm). Wird die Zusammensetzung hingegen mit dem in Bezug auf möglichst geringes Gewicht günstigeren Mischungsverhältnis und niedrigeren Dichten gewählt, hat der Kompositwerkstoff beziehungsweise die daraus bestehende Brandschutzschicht 10 eine Dichte von 0,49 g/ccm (0,7•0,2 g/ccm + 0,3•1,17 g/ccm). Erhöht man den Volumenanteil der Mikrohohlkörper 12 wie bevorzugt auf über 70 vol.%, verringert sich die Dichte des hiermit gebildeten Kompositwerkstoffs weiter.

Setzt man der Polymerphase des Kunststoffmaterials 11 hingegen Zuschlagstoffe zu, beispielsweise 15 Ma% eines phosphorhaltigen Brandschutzadditivs, das eine Dichte von typischerweise maximal 1,82 g/ccm aufweist, hat der Kompositwerkstoff eine Dichte von etwas mehr als 0,77 g/ccm und somit von immer noch unter 0,8 g/ccm (0,6•0,4 g/ccm + 0,4•(0,85•1,25 + 0,15•1,82) g/ccm).

## Patentansprüche

1. Schichtverbund umfassend:
1.1 einen Schaumkern (1) aus einem Kunststoffschaum,
1.2 eine erste Deckschicht (7) und eine zweite Deckschicht (8), zwischen denen der Schaumkern (1) angeordnet ist, wobei wenigstens eine der Deckschichten (7, 8) eine Fasermaterialschicht (8) ist, die in Kunststoff eingebettete Verstärkungsfasern, vorzugsweise in Form einer oder mehrerer Lagen einer textilen Flächenstruktur, enthält,
1.3 ein Kunststoffharz (5), das im und um den Schaumkern (1) zwischen den Deckschichten (7, 8) vorhandene Zwischenräume füllt und die Deckschichten (7, 8) und den Schaumkern (1) zusammenhält, und
1.4 eine Brandschutzschicht (10) aus einem Kompositwerkstoff (11, 12) an einer vom Schaumkern (1) abgewandten Seite der Fasermaterialschicht (8),
1.5 wobei der Kompositwerkstoff (11, 12) Mikrohohlkörper (12) aus Keramik oder Glas in einem Kunststoffmaterial (11) enthält.

2. Schichtverbund nach dem vorhergehenden Anspruch, wobei der Kompositwerkstoff (11, 12) eine Dichte von höchstens 0,8 g/ccm oder höchstens 0,6 g/ccm hat.

3. Schichtverbund nach einem der vorhergehenden Ansprüche, wobei das Kunststoffmaterial (11) des Kompositwerkstoffs (10) zu wenigstens 80 Massen% aus einer Polymerphase mit einer Dichte von höchstens 1,5 g/ccm oder höchstens 1,3 g/ccm besteht.

4. Schichtverbund nach einem der vorhergehenden Ansprüche, wobei die Mikrohohlkörper (12) eine Dichte von höchstens 0,4 g/ccm oder höchstens 0,3 g/ccm haben.

5. Schichtverbund nach einem der vorhergehenden Ansprüche, wobei ein Massenanteil der Mikrohohlkörper (12) von wenigstens 80% eine größte äußere Erstreckung von höchstens 120 µm und wenigstens 20 µm aufweist.

6. Schichtverbund nach einem der vorhergehenden Ansprüche, wobei der Volumenanteil der Mikrohohlkörper (12) des Kompositwerkstoffs (10) größer, vorzugsweise wenigstens 1,5- oder wenigstens 2-mal so groß, wie der Volumenanteil des Kunststoffmaterials (11) des Kompositwerkstoffs (11, 12) ist.

7. Schichtverbund nach einem der vorhergehenden Ansprüche, wobei der Kompositwerkstoff (11, 12) eine geringere Dichte als das Kunststoffharz (5), das den Schaumkern (1) und die Deckschichten (7, 8) zusammenhält, hat.

8. Schichtverbund nach einem der vorhergehenden Ansprüche, wobei das Kunststoffharz (5), das den Schaumkern (1) und die Fasermaterialschichten (7, 8) zusammenhält, eine Dichte von höchstens 1,5 g/ccm oder höchstens 1,3 g/ccm hat.

9. Schichtverbund nach einem der vorhergehenden Ansprüche, wobei die Brandschutzschicht (10) eine Dicke von höchstens 2 mm oder höchstens 1,5 mm hat.

10. Schichtverbund nach einem der vorhergehenden Ansprüche, wobei das Kunststoffmaterial (11) des Kompositwerkstoffs (10) zu wenigstens 80 Massen% aus einer Polymerphase besteht, die ein Epoxidharz oder ein Vinylesterharz oder ein gesättigtes Polyesterharz oder ein ungesättigtes Polyesterharz oder ein biobasiertes Polyphenolharz, wie z.B. Furanharz, oder ein Epoxy-Vitrimer oder eine Mischung von zwei oder mehr dieser Polymere ist oder enthält.

11. Schichtverbund nach einem der vorhergehenden Ansprüche, wobei das Kunststoffmaterial (11) des Kompositwerkstoffs (10) zu wenigstens 80 Massen% aus einer Polymerphase besteht, die ein biobasiertes Polymermaterial, vorzugsweise ein biobasiertes Polyphenolharz und/oder ein biobasiertes Epoxy-Vitrimer, enthält oder ist.

12. Schichtverbund nach einem der vorhergehenden Ansprüche, wobei das Kunststoffmaterial (11) des Kompositwerkstoffs (10) Brandschutzadditive zu einem Massenanteil von wenigstens 0,1 Massen% und höchstens 20 Massen%, bezogen auf die Masse des Kunststoffmaterials (11) der Brandschutzschicht (10), enthält.

13. Schichtverbund nach einem der vorhergehenden Ansprüche, wobei der Kompositwerkstoff (11, 12) Vertiefungen an der äußeren Oberfläche des Schaumkerns (1), beispielsweise offene Poren und/oder Perforationen, und/oder im Schaumkern (1) vorhandene Zwischenräume füllt, um die Harzaufnahme des Schaumkerns (1) zu reduzieren und/oder den Schaumkern (1) vor Brand zu schützen.

14. Schichtverbund nach einem der vorhergehenden Ansprüche, wobei das Kunststoffmaterial (11) des Kompositwerkstoffs (10) mit Metalloxidpartikeln (13), beispielsweise Zinkoxidpartikeln (13), versetzt ist, um einen Schutz vor elektromagnetischen Störimpulsen zu bilden, wobei die Metalloxidpartikel (13) wenigstens 20 nm und höchstens 250 nm groß sind.

15. Kompositwerkstoff (11, 12), der Mikrohohlkörper (12) aus Glas oder Keramik in einem Kunststoffmaterial (11) enthält und als hochgefüllte Brandschutz-Spachtelmasse, vorzugsweise in Kombination mit dem Schichtverbund nach einem der vorhergehenden Ansprüche, verwendet wird.

## Claims

1. A layered composite, comprising:
1.1. a foam core (1) made of a plastic foam;
1.2. a first cover layer (7) and a second cover layer (8), between which the foam core (1) is arranged, wherein at least one of the cover layers (7, 8) is a fibre material layer (8) containing reinforcement fibres embedded in plastic, preferably in the form of one or more plies of a textile sheet structure;
1.3. a plastic resin (5) which fills intermediate spaces between the cover layers (7, 8) in and around the foam core (1) and holds the cover layers (7, 8) and the foam core (1) together; and
1.4. a fire protection layer (10) made of a composite material (11, 12) on a side of the fibre material layer (8) facing away from the foam core (1),
1.5. wherein the composite material (11, 12) contains hollow micro-bodies (12) made of ceramics or glass in a plastic material (11).

2. The layered composite according to the preceding claim, wherein the composite material (11, 12) has a density of at most 0.8 g/ccm or at most 0.6 g/ccm.

3. The layered composite according to any one of the preceding claims, wherein at least 80% by mass of the plastic material (11) of the composite material (10) consists of a polymer phase having a density of at most 1.5 g/ccm or at most 1.3 g/ccm.

4. The layered composite according to any one of the preceding claims, wherein the hollow micro-bodies (12) have a density of at most 0.4 g/ccm or at most 0.3 g/ccm.

5. The layered composite according to any one of the preceding claims, wherein a proportion by mass of at least 80% of the hollow micro-bodies (12) exhibits a greatest outer extent of at most 120 µm and at least 20 µm.

6. The layered composite according to any one of the preceding claims, wherein the proportion by volume of the hollow micro-bodies (12) of the composite material (10) is larger, preferably at least 1.5 times or at least twice as large as the proportion by volume of the plastic material (11) of the composite material (11, 12).

7. The layered composite according to any one of the preceding claims, wherein the composite material (11, 12) has a lower density than the plastic resin (5) which holds the foam core (1) and the cover layers (7, 8) together.

8. The layered composite according to any one of the preceding claims, wherein the plastic resin (5) which holds the foam core (1) and the fibre material layers (7, 8) together has a density of at most 1.5 g/ccm or at most 1.3 g/ccm.

9. The layered composite according to any one of the preceding claims, wherein the fire protection layer (10) has a thickness of at most 2 mm or at most 1.5 mm.

10. The layered composite according to any one of the preceding claims, wherein at least 80% by mass of the plastic material (11) of the composite material (10) consists of a polymer phase which is or contains an epoxy resin or a vinyl ester resin or a saturated polyester resin or an unsaturated polyester resin or a bio-based polyphenol resin, such as for example furan resin, or an epoxy vitrimer or a mixture of two or more of these polymers.

11. The layered composite according to any one of the preceding claims, wherein at least 80% by mass of the plastic material (11) of the composite material (10) consists of a polymer phase which contains or is a bio-based polymer material, preferably a bio-based polyphenol resin and/or a bio-based epoxy vitrimer.

12. The layered composite according to any one of the preceding claims, wherein a proportion by mass of at least 0.1% and at most 20% of the plastic material (11) of the composite material (10), relative to the mass of the plastic material (11) of the fire protection layer (10), contains fire protection additives.

13. The layered composite according to any one of the preceding claims, wherein the composite material (11, 12) fills recesses on the outer surface of the foam core (1), for example open pores and/or perforations, and/or intermediate spaces in the foam core (1), in order to reduce the resin absorption of the foam core (1) and/or to protect the foam core (1) from fire.

14. The layered composite according to any one of the preceding claims, wherein the plastic material (11) of the composite material (10) is mixed with metal oxide particles (13), for example zinc oxide particles (13), in order to provide protection against electromagnetic interference pulses, wherein the metal oxide particles (13) are at least 20 nm and at most 250 nm in size.

15. A composite material (11, 12) which contains hollow micro-bodies (12) made of glass or ceramics in a plastic material (11) and which is used as a highly filled fire protection filler, preferably in combination with the layered composite according to any one of the preceding claims.

## Revendications

1. Composite stratifié comprenant:
1.1 un noyau en mousse (1) constitué d'une mousse plastique,
1.2 une première couche de revêtement (7) et une seconde couche de revêtement (8), entre lesquelles est disposé le noyau en mousse (1), au moins l'une des couches de revêtement (7, 8) étant une couche de matériau fibreux (8) contenant des fibres de renforcement noyées dans du plastique, de préférence sous la forme d'une ou plusieurs épaisseurs d'une structure textile plate,
1.3 une résine plastique (5) qui remplit des espaces intermédiaires présents entre les couches de revêtement (7, 8) dans et autour du noyau en mousse (1) et maintient ensemble les couches de revêtement (7, 8) et le noyau en mousse (1), et
1.4 une couche de protection contre l'incendie (10) constituée d'un matériau composite (11, 12) sur un côté de la couche de matériau fibreux (8) opposé au noyau en mousse (1),
1.5 le matériau composite (11, 12) contenant des micro-corps creux (12) en céramique ou en verre dans une matière plastique (11).

2. Composite stratifié selon la revendication précédente, dans lequel le matériau composite (11, 12) présente une masse volumique d'au plus 0,8 g/ccm ou d'au plus 0,6 g/ccm.

3. Composite stratifié selon l'une quelconque des revendications précédentes, dans lequel la matière plastique (11) du matériau composite (10) est constituée d'au moins 80 % en masse d'une phase polymère présentant une masse volumique d'au plus 1,5 g/ccm ou d'au plus 1,3 g/ccm.

4. Composite stratifié selon l'une quelconque des revendications précédentes, dans lequel les micro-corps creux (12) présentent une masse volumique d'au plus 0,4 g/ccm ou d'au plus 0,3 g/ccm.

5. Composite stratifié selon l'une quelconque des revendications précédentes, dans lequel une fraction massique des micro-corps creux (12) d'au moins 80 % présente une étendue extérieure maximale d'au plus 120 µm et d'au moins 20 µm.

6. Composite stratifié selon l'une quelconque des revendications précédentes, dans lequel la fraction volumique des micro-corps creux (12) du matériau composite (10) est supérieure, de préférence au moins 1,5 ou au moins 2 fois plus grande, à la fraction volumique de la matière plastique (11) du matériau composite (11, 12).

7. Composite stratifié selon l'une quelconque des revendications précédentes, dans lequel le matériau composite (11, 12) présente une masse volumique inférieure à celle de la résine plastique (5) qui maintient ensemble le noyau en mousse (1) et les couches de revêtement (7, 8).

8. Composite stratifié selon l'une quelconque des revendications précédentes, dans lequel la résine plastique (5) qui maintient ensemble le noyau en mousse (1) et les couches de matériau fibreux (7, 8) présente une masse volumique d'au plus 1,5 g/ccm ou d'au plus 1,3 g/ccm.

9. Composite stratifié selon l'une quelconque des revendications précédentes, dans lequel la couche de protection contre l'incendie (10) présente une épaisseur d'au plus 2 mm ou d'au plus 1,5 mm.

10. Composite stratifié selon l'une quelconque des revendications précédentes, dans lequel la matière plastique (11) du matériau composite (10) est constituée d'au moins 80 % en masse d'une phase polymère qui est ou contient une résine époxyde ou une résine vinylester ou une résine polyester saturée ou une résine polyester insaturée ou une résine polyphénolique biosourcée, telle qu'une résine furanique, ou un vitrimère époxy ou un mélange de deux ou plusieurs de ces polymères.

11. Composite stratifié selon l'une quelconque des revendications précédentes, dans lequel la matière plastique (11) du matériau composite (10) est constituée d'au moins 80 % en masse d'une phase polymère qui contient ou est un matériau polymère biosourcé, de préférence une résine polyphénolique biosourcée et / ou un vitrimère époxy biosourcé.

12. Composite stratifié selon l'une quelconque des revendications précédentes, dans lequel la matière plastique (11) du matériau composite (10) contient des additifs de protection contre l'incendie dans une fraction massique d'au moins 0,1 % en masse et d'au plus 20 % en masse, par rapport à la masse de la matière plastique (11) de la couche de protection contre l'incendie (10).

13. Composite stratifié selon l'une quelconque des revendications précédentes, dans lequel le matériau composite (11, 12) remplit des cavités sur la surface extérieure du noyau en mousse (1), par exemple des pores ouverts et / ou des perforations, et / ou des espaces intermédiaires présents dans le noyau en mousse (1) afin de réduire l'absorption de résine par le noyau en mousse (1) et / ou de protéger le noyau en mousse (1) de l'incendie.

14. Composite stratifié selon l'une quelconque des revendications précédentes, dans lequel la matière plastique (11) du matériau composite (10) est mélangée à des particules d'oxyde métallique (13), par exemple des particules d'oxyde de zinc (13), afin de former une protection contre des impulsions d'interférence électromagnétique, les particules d'oxyde métallique (13) présentant une taille d'au moins 20 nm et d'au plus 250 nm.

15. Matériau composite (11, 12) contenant des micro-corps creux (12) en verre ou en céramique dans une matière plastique (11) et étant utilisé comme mastic de protection contre l'incendie hautement chargée, de préférence en combinaison avec le composite stratifié selon l'une quelconque des revendications précédentes.
